# EUROPÄISCHE PATENTSCHRIFT

(11) **EP 0 582 583 B1**
(45) Veröffentlichungstag und Bekanntmachung des Hinweises auf die Patenterteilung: **25.09.1996**
(21) Anmeldenummer: 92907165.2
(22) Anmeldetag: 26.03.1992
(51) Int. Cl.: H04N 9/79

(54) **VIDEORECORDER ZUR AUFZEICHNUNG VON NACH DEM LETTERBOX-VERFAHREN ÜBERTRAGENEN VIDEOSIGNALEN**
VIDEO RECORDER FOR THE RECORDING OF VIDEO SIGNALS TRANSMITTED BY THE LETTERBOX PROCESS
MAGNETOSCOPE POUR L'ENREGISTREMENT DE SIGNAUX VIDEO TRANSMIS SELON LE PROCEDE "BOITE AUX LETTRES"

(30) Priorität: 30.04.1991 DE 4114054
(43) Veröffentlichungstag der Anmeldung: 16.02.1994
(73) Patentinhaber: GRUNDIG E.M.V. Elektro-Mechanische Versuchsanstalt Max Grundig GmbH & Co. KG, D-90762 Fürth (DE)
(72) Erfinder: JANSSEN, Horst, D-8501 Schwanstetten (DE)
(86) Internationale Anmeldenummer: EP9200674
(87) Internationale Veröffentlichungsnummer: WO9220193

(56) Entgegenhaltungen:
- WO-A-91/16793
- DE-A- 3 935 358
- DE-C- 3 942 204

## Beschreibung

Die Erfindung betrifft einen Videorecorder zur Aufzeichnung von nach dem Letterbox-Verfahren übertragenen Videosignalen.

Bei der Diskussion um zukünftige Fernsehsysteme muß unterschieden werden zwischen sog. HDTV-Systemen, welche mit einer höheren Zeilenzahl arbeiten als die heutigen Fernsehsysteme PAL, NTSC und SECAM und mit diesen nicht kompatibel sind, und verbesserten Fernsehsystemen, welche mit den heutigen Fernsehsystemen kompatibel sind.

Verbesserte kompatible Fernsehsysteme haben den Vorteil, daß die heute auf dem Markt befindlichen Empfänger auch weiterhin verwendbar sind.

In der Zeitschrift "SMPTE-Journal", Januar 1989, S.14-19, werden zwei Wege zur Realisierung eines verbesserten kompatiblen (NTSC-) Fernsehsystems aufgezeigt. Der erste Weg besteht im wesentlichen darin, Chrominanzinformation nur in jedem zweiten Vollbild zu übertragen und die dazwischen liegenden Vollbilder zur Übertragung von hochauflösender Luminanzinformation zu nutzen. Der zweite Weg besteht im wesentlichen darin, zur Bildverbesserung geeignete Zusatzinformationen in dunkelgetasteten Bereichen am oberen und unteren Bildrand zu übertragen. Ein verbesserter Empfänger besitzt Schaltungen, die diese Zusatzinformationen zum Erhalt eines Bildes mit verbesserter Vertikalauflösung auswerten. Mittels eines herkömmlichen Empfängers kann ein Bild dargestellt werden, welches am oberen und unteren Rand schwarze Balken aufweist.

Ferner ist aus der Zeitschrift "Funkschau", 1989, Heft 8, S.56, der DE-C-38 40 054 und der Zeitschrift "Fernseh- und Kino-Technik", 1989, Nr.8, S.407-410, ein Verfahren zur Realisierung eines PAL-Übertragungssystems bekannt, bei dessen Verwendung auf einem Breitbildempfänger ein Bild mit einem Bildbreiten- zu Bildhöhen-Verhältnis von 16:9 darstellbar ist, während auf einem herkömmlichen 4:3-Empfänger ein Bild mit am oberen und unteren Bildrand auftretenden dunklen Streifen dargestellt werden kann.

Dazu erfolgt bildquellenseitig eine Abtastung mit einem Raster entsprechend einem vergrößerten Bild-Seitenverhältnis von 16:9. Danach wird mittels eines Konverters die Zeilenzahl der sichtbaren Zeilen entweder durch Weglassen jeder 4.Zeile oder mittels eines Interpolationsvorganges von 575 auf 431 reduziert. Diese verbleibenden 431 Zeilen werden spatial komprimiert und in einen symmetrisch zur Bildmitte liegenden Bereich eingesetzt. In die frei werdenden spatialen Räume am oberen und unteren Bildrand ( jeweils 72 Zeilen ) werden die im genannten Konverter abgesonderten Informationen, deren Amplituden auf den Ultraschwarzbereich abgesenkt wurden und welche im folgenden als Zusatzsignale bezeichnet werden, eingesetzt. Das so erzeugte Signal wird über eine Übertragungsstrecke auf die Empfangsseite übertragen. Ein auf der Empfangsseite angeordneter 16:9-Empfänger weist eine Bildsignalverarbeitungsstufe auf, in welcher die symmetrisch zur Bildmitte übertragenen 431 Zeilen spatial dekomprimiert werden. Ferner werden in der Bildsignalverarbeitungsstufe die in jeweils 72 Zeilen am oberen und unteren Bildrand übertragenen Zusatzsignale abgetrennt und in zeitlich richtiger Reihenfolge in die spatial dekomprimierten 431 Zeilen eingefügt.

Weiterhin ist es aus der DE-C-38 43 423 bekannt, die am oberen und unteren Bildrand übertragenen Informationen entweder mit reduziertem Modulationsgrad analog codiert zu übertragen, beispielsweise als Differenzsignal zwischen einer abgesonderten Zeile und einer räumlich oder zeitlich benachbarten Zeile, oder in Form von digitalen Stützinformationen zur Rekonstruktion abgesonderter Zeilen aus den sichtbar übertragenen Zeilen des gleichen und/oder des benachbarten Vollbildes. Durch ein derartiges Vorgehen soll die Sichtbarkeit der am oberen und unteren Bildrand übertragenen Informationen verringert und der Störabstand verbessert werden.

Ferner ist es aus der Deutschen Patentanmeldung DE-A-39 35 358 der Anmelderin bekannt, daß bei einer Übertragung der am oberen und unteren Bildrand gelegenen Informationen im Ultraschwarzbereich Störungen der Synchronisation des Empfängers auftreten können, da sie von dessen Amplitudensiebschaltung fälschlicherweise als Synchronimpulse interpretiert werden. Zur Lösung dieses Problems wird in der genannten Patentanmeldung vorgeschlagen, im Sender mittels einer Klemmschaltung den Schwarzpegel des Signals während der am oberen und unteren Bildrand liegenden Zeilen, in denen das Zusatzsignal ggfs.'bandbegrenzt übertragen wird, auf beispielsweise 75% der Maximalamplitude des Zeilensignals zu klemmen, wie es heute allgemein üblich ist, und während der in der Bildmitte übertragenen Zeilen beispielsweise auf 60% der Maximalamplitude des Zeilensignals. Dadurch steht der Bereich zwischen 75% und 60% der Maximalamplitude des Zeilensignals für die Übertragung der am oberen und unteren Bildrand gelegenen Informationen zur Verfügung.

Ferner ist es aus der Deutschen Patentanmeldung DE-A-39 41 122.2 der Anmelderin bekannt, in den Randzeilen ausschließlich höherfrequente Informationen zu übertragen, um ein fehlerhaftes Arbeiten herkömmlicher Synchronsignal-Abtrennschaltungen zu vermeiden.

Weiterhin ist aus der Deutschen Patentanmeldung DE-A-3942204 ein Videorecorder zur Aufzeichnung von nach dem Letterbox-Verfahren übertragenen Videosignalen bekannt. Bei diesem bekannten Videorecorder werden die in den Randzeilen übertragenen Zusatzsignale für den Aufzeichnungsvorgang in einen zwischen dem Schwarz- und dem Weißwert liegenden Amplitudenbereich umgesetzt. Dies führt zu einer verbesserten Auflösung für die Zusatzsignale und vermeidet eine unnötige Verschlechterung von deren Störabstand. Wiedergabeseitig werden die Amplituden der Zusatzsignale wieder in den Ultraschwarzbereich rückumgesetzt. Werden die auf diese Weise wiedergegebenen Signale mittels eines herkömmlichen Fernsehempfängers, welcher keine spezielle Elektronik zur Verarbeitung von nach dem Letterbox-Verfahren übertragenen Videosignalen hat, dargestellt, dann treten in den oberen und unteren Randbereichen am Bildschirm Farbstörungen auf, die auf den Betrachter unangenehm wirken.

Der Erfindung liegt die Aufgabe zugrunde, einen Videorecorder mit den im Oberbegriff des Anspruchs 1 angegebenen Merkmalen derart weiterzubilden, daß derartige Störungen nicht auftreten.

Diese Aufgabe wird bei einem Videorecorder mit den im Oberbegriff des Anspruchs 1 angegebenen Merkmalen durch die im kennzeichnenden Teil des Anspruchs 1 angegebenen Merkmale gelöst.

Die Vorteile der Erfindung bestehen insbesondere darin, daß das Ausgangssignal des beanspruchten Videorecorders auf herkömmlichen Fernsehempfängern dargestellt werden kann, ohne daß im oberen und im unteren Randbereich des Bildschirms Farbstörungen auftreten.

Vorteilhafte Ausgestaltungen und Weiterbildungen der Erfindung ergeben sich aus den Unteransprüchen.

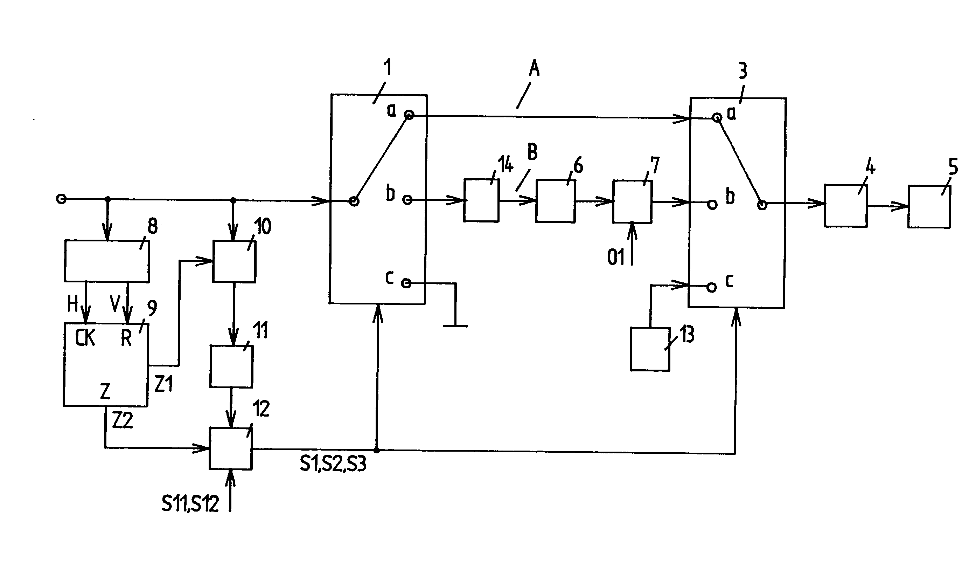

Im folgenden wird die Erfindung anhand des in der Figur gezeigten Ausführungsbeispiels näher erläutert.

Dem Eingang der in der Figur gezeigten Einrichtung wird ein nach dem Letterbox-Verfahren erzeugtes PAL-Videosignal zugeführt.

Dieses Videosignal hat 575 aktive Zeilen, von denen die 431 symmetrisch zur Bildmitte gelegenen Zeilen Bildinformationen in einem zwischen dem Schwarz- und dem Weißwert liegenden Amplitudenbereich und die am oberen und unteren Bildrand liegenden 72 Zeilen Zusatzinformationen in einem Amplitudenbereich aufweisen, der symmetrisch zum Schwarzpegel liegt. Das dem Eingang der Einrichtung zugeführte Videosignal enthält ferner in einer Zeile der vertikalen Austastlücke ein Kennsignal dafür, daß es sich beim genannten Signal um ein nach dem Letterbox-Verfahren erzeugtes Videosignal handelt. Dieses Kennsignal, welches beispielsweise in der 13.Zeile nach dem Vertikalsynchronimpuls enthalten ist, besteht aus einem Wechsel zwischen dem Weiß- und dem Schwarzwert, welche jeweils für die Dauer einer halben Zeile übertragen werden, wie es in der Deutschen Patentanmeldung DE-A-39 35 547.0 der Anmelderin beschrieben ist.

Dieses Videosignal wird einem Schalter 1, einer Synchronsignal-Abtrennschaltung 8 und einem Schalter 10 zugeführt. Die Klemme a des Schalters 1 ist mit einem ersten Signalweg A gekoppelt, dessen Ausgangssignal der Klemme a eines Schalters 3 zugeführt wird. Die Klemme b des Schalters 1 ist mit einem zweiten Signalweg B gekoppelt, welcher parallel zum ersten Signalweg liegt. Dieser zweite Signalweg enthält einen Demodulator 14 zur Demodulation der Zusatzsignale, welche im Sender einem Träger aufmoduliert wurden, einen Verstärker 6 und einen Offset-Addierer 7, dessen Ausgangssignal der Klemme b des Schalters 3 zugeführt wird. Das Ausgangssignal des Schalters 3 wird in einem Frequenzmodulator 4 frequenzmoduliert und das frequenzmodulierte Signal von den rotierenden Videoköpfen einer Videokopfeinheit 5 in Schrägspuren eines Magnetbandes aufgezeichnet.

Die Schalter 1 und 3 werden in einem ersten Aufzeichnungsmodus derart gesteuert, daß sie sich für die Dauer der am oberen Bildrand liegenden 72 Zeilen und der am unteren Bildrand liegenden 72 Zeilen, in denen die Zusatzsignale übertragen werden, in der Schaltstellung c und für die Dauer der im mittleren Teil des Bildes übertragenen Videosignale in der Schaltstellung a befinden.

Folglich werden die im mittleren Teil des Bildes übertragenen Videosignale unbeeinflußt zum Frequenzmodulator 4 durchgelassen. Weiterhin wird für die Dauer des Bildinhaltes bzw. der aktiven Zeilenzeit der Randzeilen eine in einer Spannungsquelle 13 erzeugte Gleichspannung, die entweder dem Schwarzwert entspricht oder in dessen Nähe liegt, dem Frequenzmodulator 4 zugeführt.
Wird eine auf diese Weise erhaltene Aufzeichnung mittels eines herkömmlichen Wiedergabeverfahrens, wie es heute beispielsweise bei VHS-Videorecordern verwendet wird, wiedergegeben und auf dem Bildschirm eines herkömmlichen, nicht für die Verarbeitung von Letterbox-Signalen vorbereiteten Fernsehempfängers dargestellt, dann erscheinen bei dieser Wiedergabe am oberen und am unteren Rand des Bildschirms schwarze bzw. dunkelgraue Flächen. Es treten keine Farbstörungen auf.

In einem zweiten Aufzeichnungsmodus werden die Schalter 1 und 3 derart gesteuert, daß sie sich für die Dauer der am oberen Bildrand liegenden 72 Zeilen und der am unteren Bildrand liegenden 72 Zeilen, in denen die Zusatzsignale übertragen werden, in der Schaltstellung b und für die Dauer der im mittleren Teil des Bildes übertragenen Videosignale in der Schaltstellung a befinden.

Folglich werden die im mittleren Teil des Bildes übertragenen Videosignale unbeeinflußt zum Frequenzmodulator 4 durchgelassen. Hingegen werden die in den Randzeilen übertragenen Zusatzsignale im Demodulator 14 demoduliert, im Verstärker 6 verstärkt und im Offset-Addierer 7 einer Offset-Spannung 01 überlagert, derart, daß die Zusatzsignale in einen zwischen dem Schwarz- und dem Weißwert liegenden Amplitudenbereich umgesetzt werden. Das Ausgangssignal des Offset-Addierers 7 wird über den Schalter 3 dem Frequenzmodulator 4 zugeführt.

Eine auf diese Weise erhaltene Aufzeichnung kann mittels eines herkömmlichen Wiedergabeverfahrens, wie es heute beispielsweise bei VHS-Videorecordern verwendet wird, wiedergegeben werden. Erfolgt anschließend eine Darstellung auf einem verbesserten Fernsehempfänger, welcher eine für die Verarbeitung der Zusatz signale geeignete Elektronik aufweist, so kann aus der Bidmitteninformation und den Zusatzsignalen wieder ein qualitativ gutes Bild mit 575 aktiven Zeilen regeneriert werden.

Eine auf diese Weise erhaltene Aufzeichnung kann aber auch mittels eines Wiedergabeverfahrens, wie es in der obengenannten Deutschen Patentanmeldung DE-A-39 42 204 beschrieben ist, wiedergegeben werden. Dabei werden im Wiedergabesignalweg die Amplituden der Zusatzsignale wieder in ihren ursprünglichen Amplitudenbereich rückumgesetzt und gegebenenfalls remoduliert.

Die Steuersignale S1,S2 bzw. 53 für die Schalter 1 und 3 werden auf folgende Weise erzeugt: Mittels der Synchronsignal-Abtrennschaltung 8 werden aus dem Eingangssignal die Horizontalsynchronimpulse H und die Vertikalsynchronimpulse V abgetrennt. Die Vertikalsynchronimpulse V werden dem Rücksetzeingang R und die Horizontalsynchronimpulse H dem Zähleingang CK einer Zählschaltung 9 zugeführt. Die Zählschaltung 9 liefert an einem Ausgang Z1 ein die Kennsignalzeile markierendes Signal. In Ansprache auf dieses Signal wird der Schalter 10 für die Dauer der Kennsignalzeile durchlässig geschaltet. Folglich wird das in der Kennsignalzeile übertragene Signal einer Kennsignal-Auswerteschaltung 11 zugeführt. Eine mögliche Ausgestaltung einer derartigen Kennsignal-Auswerteschaltung ist in der bereits oben angeführten Patentanmeldung DE-A-39 35 547 beschrieben.

Das Ausgangssignal der Kennsignal-Auswerteschaltung 11, welches Auskunft darüber gibt, ob das Eingangssignal ein nach dem Letterbox-Verfahren erzeugtes Videosignal ist oder nicht, wird einer Schaltersteuerung 12 zugeführt. Der Schaltersteuerung 12 wird weiterhin ein an einem Ausgang Z2 der Zählschaltung 9 zur Verfügung stehendes Zählsignal zugeführt, welches Auskunft über die aktuelle Zeilennummer gibt.

Wenn es sich beim Eingangssignal um ein nach dem Letterbox-Verfahren erzeugtes Videosignal handelt und der Schaltersteuerung 12 weiterhin ein Bedienbefehl S11 zur Initialisierung des ersten Aufzeichnungsmodus zugeführt wird, dann erzeugt die Schaltersteuerung 12 ein Schaltsignal S1 derart, daß die im mittleren Teil des Bildes übertragenen Videosignale über den Signalweg A und die Klemme a des Schalters 3 an den Frequenzmodulator 4 geleitet werden und während der aktiven Zeilenzeit der am oberen und unteren Bildrand gelegenen 72 Zeilen das von der Spannungsquelle 13 erzeugte Signal, dessen Pegel dem Schwarzwert entspricht oder in dessen Nähe liegt, über die Klemme c des Schalters 3 dem Frequenzmodulator 4 zugeführt wird.

Wenn es sich beim Eingangssignal um ein nach dem Letterbox-Verfahren erzeugtes Videosignal handelt und der Schaltersteuerung 12 ein Bedienbefehl S12 zur Initialisierung des zweiten Aufzeichnungsmodus zugeführt wird, dann erzeugt die Schaltersteuerung 12 ein Steuersignal S2, aufgrund dessen die im mittleren Teil des Bildes übertragenen Videosignale über den Signalweg A und die Klemme a des Schalters 3 an den Frequenzmodulator 4 geleitet werden und die in den Randzeilen übertragenen Zusatzinformationen über den Signalweg B geleitet werden.

Handelt es sich beim Eingangssignal hingegen um ein herkömmliches, nicht nach dem Letterbox-Verfahren erzeugtes Videosignal, dann erzeugt die Schaltersteuerung 12 ein Steuersignal S3, aufgrund dessen sämtliche Zeilen des Videosignals über den Signalweg A geleitet werden.

Beim vorstehend beschriebenen Videorecorder werden die in den Randzeilen übertragenen Zusatzsignale, deren Amplituden in einem symmetrisch zum Schwarzpegel gelegenen Amplitudenbereich liegen, in einem ersten Aufzeichnungsmodus durch ein Signal ersetzt, dessen Pegel dem Schwarzwert entspricht oder in dessen Nähe liegt. Dieser Aufzeichnungsmodus ist dann von Vorteil, wenn dem Benutzer nur ein 4:3-Bildschirm zur Betrachtung des wiedergegebenen Signals zur Verfügung steht. In der einfachsten Ausführungsform hat der Videorecorder lediglich diesen einen Aufzeichnungsmodus.

Gemäß einer vorteilhaften Weiterbildung hat der Videorecorder jedoch einen zweiten Aufzeichnungsmodus, bei welchem die in den Randzeilen übertragenen Zusatzsignale in einen zwischen dem Schwarz- und dem Weißwert liegenden Amplitudenbereich umgesetzt werden. Dadurch wird auch für die in den Randzeilen übertragenen Zusatzsignale dieselbe Auflösung erzielt wie für die im mittleren Teil des Bildes übertragenen Signale. Ferner wird bei einem derartigen Vorgehen der Rauschabstand der in den Randzeilen übertragenen Zusatzsignale nicht unnötig verschlechtert, wie es bei einer Aufzeichnung im Ultraschwarzbereich liegender Signale der Fall wäre.

Gemäß einer vorteilhaften Ausgestaltung der Erfindung weist der beanspruchte Videorecorder eine nicht gezeichnete Schaltung zur Generierung eines zweiten Kennsignals zur Kennzeichnung eines Letterbox-Signals auf. Diese Schaltung wird von der Kennsignal-Auswerteschaltung 11 oder der Schaltersteuerung 12 dann angesteuert, wenn die Kennsignal-Auswerteschaltung ein im Videosignal enthaltenes erstes Kennsignal identifiziert hat und eine Aufzeichnung gemäß dem zweiten Aufzeichnungsmodus erfolgt. Damit kann dem Umstand Rechnung getragen werden, daß ein im Videosignal enthaltenes erstes Kennsignal zur magnetischen Aufzeichnung - beispielsweise wegen eines nicht ausreichenden Fehlerschutzes - nicht geeignet ist. Dieses zweite Kennsignal, welches weiterhin eine im Videorecorder generierte Information über den Aufzeichnungsmodus enthalten kann, wird auf dem Magnetband aufgezeichnet.

Hierzu gibt es verschiedene Möglichkeiten :
- das zweite Kennsignal wird in einer nicht sichtbaren Zeile der vertikalen Austastlücke mittels der Videokopfeinheit 5 frequenzmoduliert aufgezeichnet, oder
- das zweite Kennsignal wird mittels eines Steuerspurkopfes durch Impulsbreitenmodulation der Steuerspur- bzw. CTL-Impulse aufgezeichnet, oder
- das zweite Kennsignal wird als digitales Signal - beispielsweise zusammen mit dem Tonsignal - in einem eigenen Aufzeichnungskanal verarbeitet und in den Videoschrägspuren nach dem Tiefen-Multiplex-Verfahren oder an deren Ende aufgezeichnet.

Ein derartig aufgezeichnetes zweites Kennsignal steht dann wiedergabeseitig zur Verfügung und kann zur Auslösung der jeweils erforderlichen Signalverarbeitung verwendet werden.

## Patentansprüche

1. Videorecorder zur Aufzeichnung eines n-zeiligen Videosignals, welches in n-x Zeilen Bildinformationen in einem zwischen dem Schwarz- und dem Weißwert liegenden Amplitudenbereich und in x Zeilen Zusatzsignale enthält, deren Amplituden in einem symmetrisch zum Schwarzpegel gelegenen Amplitudenbereich liegen, mit
- einem Frequenzmodulator zur Frequenzmodulation des Videosignals und
- einer Videokopfeinheit zur Aufzeichnung des frequenzmodulierten Videosignals auf einen Aufzeichnungsträger
**dadurch gekennzeichnet,** daß
er einen ersten insbesondere zur Wiedergabe des Videosignals auf einem 4:3-Bildschism geeigneten Aufzeichnungsmodus aufweist, in welchem eine erste Schaltung (3,12,13) wirksam ist, die die Zusatzsignale durch ein Signal konstanten Pegels ersetzt, welcher dem Schwarzpegel entspricht oder in dessen Nähe liegt.

2. Videorecorder nach Anspruch 1,
**dadurch gekennzeichnet,** daß
er weiterhin einen zweiten Aufzeichnungsmodus aufweist, in welchem eine zweite Schaltung (6,7,14) wirksam ist, die die Amplituden der Zusatz signale in einen zwischen dem Schwarz- und dem Weißwert liegenden Amplitudenbereich umsetzt.

3. Videorecorder nach Anspruch 1 oder 2,
**dadurch gekennzeichnet,** daß
er einen Schalter (3) aufweist, an dessen verschiedenen Eingängen das Signal konstanten Pegels, das in einen zwischen dem Schwarz- und dem Weißwert liegenden Amplitudenbereich umgesetzte Signal und die in den n-x Zeilen enthaltenen Bildinformationen anliegen.

4. Videorecorder nach Anspruch 3,
**dadurch gekennzeichnet,** daß er
- eine Schaltung (8) zur Abtrennung der Horizontalsynchronimpulse (H) und der Vertikalsynchronimpulse (V) aus dem Videosignal,
- eine Zählschaltung (9), deren Rücksetzeingang (R) die Vertikalsynchronimpulse (V) und deren Zähleingang (CK) die Horizontalsynchronimpulse (H) zugeführt werden, und
- eine mit einem Ausgang der Zählschaltung (9) verbundene Schaltersteuerung (12) aufweist, mittels deren Ausgangssignal (S1,S2,S3) die Umschaltung des Schalters (3) erfolgt.

5. Videorecorder nach Anspruch 4,
**dadurch gekennzeichnet,** daß
der Schaltersteuerung (12) ein Bedienbefehl (S11) zugeführt wird, aufgrund dessen die Schaltersteuerung (12) ein Schaltsignal (S1) derart erzeugt, daß abwechselnd das Signal konstanten Pegels und die in den n-x Zeilen enthaltenen Bildinformationen über den Schalter (3) dem Frequenzmodulator (4) zugeführt werden.

6. Videorecorder nach einem der vorhergehenden Ansprüche,
**dadurch gekennzeichnet,** daß er eine Auswerteschaltung (9,10,11) zur Auswertung eines im Videosignal enthaltenen Kennsignals aufweist und daß das Ausgangssignal der Auswerteschaltung (9,10,11) der Schaltersteuerung (12) zugeführt wird.

7. Videorecorder nach Anspruch 6,
**dadurch gekennzeichnet,** daß
er weiterhin eine von der Kennsignal-Auswerteschaltung (9,10,11) angesteuerte Schaltung zur Generierung eines zweiten Kennsignals hat, welches auf dem Aufzeichnungsträger aufgezeichnet wird.

8. Videorecorder nach Anspruch 7,
**dadurch gekennzeichnet,** daß
das zweite Kennsignal zusätzlich Informationen über den Aufzeichnungsmodus enthält.

9. Videorecorder nach einem der vorhergehenden Ansprüche,
**dadurch gekennzeichnet,** daß
die zweite Schaltung (6,7,14) einen Demodulator (14) zu Demodulation der Zusatzsignale, einen Verstärker (6) und einen Offset-Addierer (7) enthält.

## Claims

1. Video recorder for recording an n-line video signal which contains in n-x lines picture information in an amplitude range situated between the black level and the white level and in x lines contains additional signals whose amplitudes are situated in an amplitude range positioned symmetrically with respect to the black level, comprising
- a frequency modulator for the frequency modulation of the video signal, and
- a video-head unit for recording the frequency-modulated video signal on a recording carrier,
characterized in that it has a first recording mode which is suitable, in particular, for playing back the video signal on a 4:3 picture screen and in which a first circuit (3, 12, 13) is operative which replaces the additional signals by a signal of constant level which corresponds to the black level or is situated in its vicinity.

2. Video recorder according to Claim 1, characterized in that it furthermore has a second recording mode in which a second circuit (6, 7, 14) is operative which circuit converts the amplitudes of the additional signals into an amplitude range situated between the black level and the white level.

3. Video recorder according to Claim 1 or 2, characterized in that it has a switch (3) at whose various inputs the signal of constant level, the signal converted to an amplitude range situated between the black level and the white level and the picture information contained in the n-x lines are present.

4. Video recorder according to Claim 3, characterized in that it has
- a circuit (8) for separating the horizontal synchronizing pulses (H) and the field synchronizing pulses (V) from the video signal,
- a counting circuit (9) to whose reset input (R) the field synchronizing pulses (V) are fed and to whose counting input (CK) the horizontal synchronizing pulses (H) are fed, and
- a switch control (12) which is connected to an output of the counting circuit (9) and whose output signal (S1, S2, S3) switches over the switch (3).

5. Video recorder according to Claim 4, characterized in that there is fed to the switch control (12) an operating command (S11) on the basis of which the switch control (12) generates a switching signal (S1) in such a way that the signal of constant level and the picture information contained in the n-x lines are fed alternately to the frequency modulator (4) via the switch (3).

6. Video recorder according to one of the preceding claims, characterized in that it has an evaluation circuit (9, 10, 11) for evaluating a code signal contained in the video signal and in that the output signal of the evaluation circuit (9, 10, 11) is fed to the switch control (12).

7. Video recorder according to Claim 6, characterized in that it furthermore has a circuit, driven by the code-signal evaluation circuit (9, 10, 11), for generating a second code signal which is recorded on the recording carrier.

8. Video recorder according to Claim 7, characterized in that the second code signal additionally contains information about the recording mode.

9. Video recorder according to one of the preceding claims, characterized in that the second circuit (6, 7, 14) contains a demodulator (14) for demodulating the additional signals, an amplifier (6) and an offset adder (7).

## Revendications

1. Magnétoscope pour l'enregistrement d'un signal vidéo à n lignes, qui contient, dans n-x lignes, des informations d'image dans une gamme d'amplitudes se situant entre le niveau du noir et le niveau du blanc, et, dans x lignes, des signaux supplémentaires, dont les amplitudes sont situées dans une gamme d'amplitudes qui est symétrique par rapport au niveau du noir, et comportant
- un modulateur de fréquence pour réaliser la modulation de fréquence du signal vidéo, et
- une unité à têtes vidéo pour l'enregistrement du signal vidéo modulé en fréquence sur un support d'enregistrement,
caractérisé en ce qu'il comporte un premier mode d'enregistrement - convenant notamment pour la reproduction du signal vidéo sur un écran 4:3 -, dans lequel agit un premier circuit (3,12,13), qui remplace les signaux supplémentaires par un signal à niveau constant qui correspond au niveau du noir ou en est proche.

2. Magnétoscope selon la revendication 1, caractérisé en ce qu'il comporte en outre un second mode d'enregistrement, dans lequel agit un second circuit (6,7,14), qui convertit les amplitudes des signaux supplémentaires en une gamme d'amplitudes située entre le niveau du noir et le niveau du blanc.

3. Magnétoscope selon la revendication 1 ou 2, caractérisé en ce qu'il comporte un commutateur (3), aux différentes entrées duquel sont appliqués le signal à niveau constant, le signal amené par conversion dans une gamme d'amplitudes située entre le niveau du noir et le niveau du blanc, et les informations d'image contenues dans les n-x lignes.

4. Magnétoscope selon la revendication 3, caractérisé en ce qu'il comporte
- un circuit (8) pour extraire les impulsions de synchronisation horizontale (H) et les impulsions de synchronisation verticale (V) du signal vidéo,
- un circuit de comptage (9), à l'entrée de remise à zéro (R) duquel sont envoyées les impulsions de synchronisation verticale (V) et à l'entrée de comptage (CK) duquel sont envoyées les impulsions de synchronisation horizontale (H), et
- une unité (12) de commande du commutateur, qui est reliée à la sortie du circuit de comptage (9) et au moyen du signal de sortie (S1,S2,S3) duquel s'effectue la commutation du commutateur (3).

5. Magnétoscope selon la revendication 4, caractérisé en ce qu'à l'unité (12) de commande du commutateur est envoyée une instruction de commande (S11), sur la base de laquelle l'unité (12) de commande du commutateur produit un signal de commutation (S1) de telle sorte que le signal à niveau constant et les informations d'image contenues dans les n-x lignes sont envoyés alternativement au modulateur de fréquence (4) par l'intermédiaire du commutateur (3).

6. Magnétoscope selon l'une des revendications précédentes, caractérisé en ce qu'il comporte un circuit d'exploitation (9,10,11) pour exploiter un signal caractéristique contenu dans le signal vidéo, et que le signal de sortie du circuit d'exploitation (9,10,11) est envoyé à l'unité (12) de commande du commutateur.

7. Magnétoscope selon la revendication 6, caractérisé en ce qu'il comporte en outre un circuit, qui est raccordé au circuit (9,10,11) d'exploitation du signal caractéristique et sert à produire un second signal caractéristique, qui est enregistré sur le support d'enregistrement.

8. Magnétoscope selon la revendication 7, caractérisé en ce que le second signal caractéristique contient en outre des informations concernant le mode d'enregistrement.

9. Magnétoscope selon l'une des revendications précédentes, caractérisé en ce que le second circuit (6,7,14) contient un démodulateur (14) servant à démoduler les signaux supplémentaires, un amplificateur (6) et un additionneur (7) d'un décalage.
